# EUROPÄISCHE PATENTSCHRIFT

(11) **EP 3 665 036 B1**
(45) Veröffentlichungstag und Bekanntmachung des Hinweises auf die Patenterteilung: **16.02.2022**
(21) Anmeldenummer: 18778812.0
(22) Anmeldetag: 06.09.2018
(51) Int. Cl.: B60M 1/28, B61L 23/04, B61L 25/02, G01C 21/00, B61L 27/00, B61L 15/00

(54) **VERFAHREN ZUR ZUSTANDSBESTIMMUNG VON WENIGSTENS EINER ENTLANG EINER FAHRSTRECKE VERLAUFENDEN FAHRLEITUNG**
METHOD FOR DETERMINING CONDITION OF AT LEAST ONE RAILWAY LINE ALONG A TRAVEL ROUTE
PROCÉDÉ DE DÉTERMINATION DE CONDITION D'AU MOINS UNE LIGNE DE TRACTION LE LONG D'UN TRAJET

(30) Priorität: 29.09.2017 DE 102017217450
(43) Veröffentlichungstag der Anmeldung: 17.06.2020
(73) Patentinhaber: Siemens Mobility GmbH, 81739 München (DE)
(72) Erfinder: TERFLOTH, Sebastian, 91080 Uttenreuth (DE); DÖLLING, Andre, 91056 Erlangen (DE)
(86) Internationale Anmeldenummer: PCT/EP2018/073991
(87) Internationale Veröffentlichungsnummer: WO 2019/063260

(56) Entgegenhaltungen:
- WO-A1-2016/149064
- DE-A1-102010 050 899
- JP-A- H02 290 746
- JP-A- 2008 281 461
- US-A1- 2010 004 804
- US-A1- 2012 217 351
- US-A1- 2016 082 991

## Beschreibung

Die Erfindung betrifft ein Verfahren zur Zustandsbestimmung von wenigstens einer entlang einer Fahrstrecke verlaufenden Fahrleitung, bei dem auf Seiten von wenigstens einem mehrfach auf der Fahrstrecke fahrenden Fahrzeug mehrere Messwerte von wenigstens einer Kenngröße gemessen und aufgezeichnet werden und für jeden Messwert eine Position des Fahrzeugs entlang der Fahrstrecke, insbesondere in Form von einer geographischen Länge und Breite, eine Fahrtrichtung des Fahrzeugs und ein Zeitstempel ermittelt und dem Messwert zugeordnet werden.

Fahrleitungen von elektrischen Bahnen oder oberleitungsgeführten Straßenfahrzeugen, wie beispielsweise E-Highway oder O-Bus, müssen belastungsgerecht instandgehalten werden, um eine geforderte Verfügbarkeit zu erreichen. Die Instandhaltung gliedert sich üblicherweise in Inspektion, Wartung und Instandsetzung.

Die Inspektion dient der Feststellung eines Zustands der Fahrleitung und ist die Grundlage zur Festlegung von Wartungs- und Instandsetzungsmaßnahmen. Die Inspektion wird üblicherweise nach festen zeitlichen Abständen durchgeführt. Durch eine Inaugenscheinnahme und ggf. einfache Messmethoden, wie beispielsweise die Messung von Abständen, einer Fahrdrahtstärke und ähnliches, wird der Anlagenzustand durch Mitarbeiter vor Ort festgestellt. Ein wesentlicher Einflussfaktor ist dabei der Erfahrungsschatz der Instandhaltungsmitarbeiter, um Schwachstellen und Fehler in der Fahrleitung lokalisieren zu können. Abhängig von der Belastung der Fahrleitung können die Abstände der Inspektion lokal bzw. abschnittsweise verkürzt werden.

Allerdings sind solche Inspektionen durch die nötigen Mitarbeiter und Fahrzeuge ressourcenintensiv und zeitintensiv. Sie können größtenteils nur in Betriebspausen durchgeführt werden, weil die Inspektionsmitarbeiter bzw. das Instandhaltungspersonal mit ihren Fahrzeugen die Strecke blockieren und/oder die Fahrleitung abgeschaltet werden muss, wenn nicht unter Spannung gearbeitet werden kann. Sind keine Betriebspausen vorhanden, wie beispielsweise üblicherweise im Vollbahnbereich, sind für die Inspektionsmaßnahmen sogar Streckensperrungen erforderlich.

Alternativ könnte ein durchgehendes technisches Überwachen von Schlüsselkomponenten durch einen Einsatz von stationären Diagnoseeinrichtungen ersetzt werden. Jedoch ist dies aufgrund der großen Ausdehnungen von Fahrleitungsanlagen und einer Vielzahl von Einzelkomponenten sehr aufwendig und dadurch selten wirtschaftlich.

In jedem Fall ist eine Erfassung des Zustands der Fahrleitung wichtig. Faktoren, die die Abnutzung der Anlage beschleunigen, aber dem Instandhalter nicht bekannt sind, können im schlimmsten Fall zu vorzeitigem Bauteilversagen und sogar zu einem Ausfall der Anlage führen. Auf der anderen Seite kann eine unbemerkte Verringerung der Beanspruchung dazu führen, dass Inspektionen für die Anlage durchgeführt werden, die noch nicht erforderlich gewesen wären.

Alternativ zur klassischen Inspektion durch Inaugenscheinnahme können auch spezielle Messfahrzeuge eingesetzt werden, die den Anlagenzustand im Rahmen von besonderen Inspektionsfahrten feststellen. Da solche Messfahrten häufig jedoch in großen zeitlichen Abständen, wie beispielsweise jährlich, durchgeführt werden, lassen diese teilweise nur einen geringen Rückschluss auf den Anlagenzustand zu, da Veränderungen am Anlagenzustand zwischen den Messfahrten unbemerkt bleiben. Ferner können bei den Messfahrten witterungsbedingte und belastungsabhängige Effekte unter Betriebsbedingungen nicht aufgenommen werden und sie unterliegen der persönlichen Fahrweise des Messfahrzeugführers.

Als eine weitere Möglichkeit ist in der DE 10 2016 201 416 A1 ein Verfahren vorgeschlagen, das durch Einsatz von Messtechnik auf regulär eingesetzten Fahrzeugen verschleißrelevante Messgrößen erfasst und dadurch einen Rückschluss auf den aktuellen Anlagezustand erlaubt. Damit wird der Anlagenzustand zumindest teilweise automatisiert erfasst, so dass zeit- und ressourcenintensive Inspektionsbefahrungen deutlich verringert werden oder entfallen können.

Weitere Verfahren zur Zustandsbestimmung von Fahrleitungen sind beispielsweise in der DE 10 2014 226 694 A1, in der US 2010/0004804 A1, in der JP 2008 281461 A, in der US 2016/0082991 A1 oder der EP 2 404 777 A1 beschrieben.

Problematisch ist an den oben beschriebenen Verfahren, dass zwar eine große Anzahl von Messwerten ermittelt wird, diese aber an sich noch keine Aussage über den Zustand der Fahrleitung geben. Hierfür ist eine manuelle Auswertung der Ergebnisse nötig, die mit erheblichem Aufwand verbunden ist.

Es ist daher die Aufgabe der vorliegenden Erfindung, ein Verfahren der eingangs genannten Art bereitzustellen, durch das belastete Bereiche der Fahrleitung mit wenig Aufwand, automatisch ermittelt werden können.

Erfindungsgemäß wird diese Aufgabe durch die Merkmale des unabhängigen Patentanspruchs 1 gelöst. Weiterbildungen und Ausgestaltungen der Erfindung finden sich in den Merkmalen der abhängigen Patentansprüche wieder.

Die erfindungsgemäße Lösung hat den Vorteil, dass durch die Auswertung aller für den ausgewählten Streckenbereich vorhandenen Messwerte einzelne Ausreißer in den Messwerten, die keine Aussagekraft über für den Zustande der Fahrleitung in diesem Streckenbereich haben, nicht ins Gewicht fallen. Dadurch kann eine automatische Auswertung erfolgen, die zu einer verlässlichen Aussage führt, ob eine Wartung für einen Streckenbereich notwendig ist oder nicht.

Bei dem erfindungsgemäßen Verfahren sammelt zunächst das Fahrzeug oder auch mehrere Fahrzeuge bei der Fahrt bzw. den Fahrten entlang der Fahrstrecke eine Vielzahl von Messwerten von wenigstens einer Kenngröße. Das Fahrzeug fährt beispielsweise regelmäßig und mehrmals auf der Fahrstrecke. Die Messwerte können bei jeder Fahrt aufgenommen werden, je nach Fahrplan also beispielsweise täglich. Als Kenngröße kommen hier beispielsweise ein Kontaktstrom zwischen Fahrdraht und Fahrzeug, eine Geschwindigkeit des Fahrzeugs, eine Kontaktkraft des Stromabnehmers oder Messwerte, die für einen auftretenden Lichtbogen charakteristisch sind, in Frage. Dies wird im Folgenden noch genauer erläutert. Alternativ können selbstverständlich auch Messwerte von mehreren Kenngrößen ermittelt werden. Die Messwerte werden beispielsweise in eine Matrix eingetragen, in die erfindungsgemäß zu jedem Messwert auch eine Position des Fahrzeugs, die Fahrtrichtung des Fahrzeugs und ein Zeitstempel eingetragen werden. Die Position des Fahrzeugs kann beispielsweise in Form von einer geographischen Länge und Breite angegeben werden, die beispielsweise über ein GPS System ermittelt werden. Die Position kann aber auch auf andere bekannte Weisen ermittelt werden, beispielsweise über ein fahrzeugseitiges Wegmesssystem, was auch bei Tunnelfahrten einsetzbar wäre. Für die Auswertung werden nun die Messwerte, deren zugeordnete Position in den jeweils ausgewählten Streckenbereich fallen, zusammen ausgewertet. Dies wird beispielsweise für alle Streckenbereiche einer Fahrstrecke durchgeführt. Die Streckenbereiche können beispielsweise entlang der gesamten Fahrstrecke liegen und einen vorbestimmten Abstand voneinander haben. Die Streckenbereiche können dabei natürlich auch Streckenpunkte sein. Alternativ können aber auch nur bestimmte Streckenbereiche herausgesucht werden, die z. B. von besonderem Interesse sind.

Durch das erfindungsgemäße Verfahren werden die Messwerte für jeden Streckenbereich gebündelt, so dass bei einer Vielzahl von Fahrten des Fahrzeugs entlang der Fahrstrecke eine sichere Interpretation des Anlagenzustands möglich ist. Erfindungsgemäß können belastete Bereiche sehr einfach automatisch ermittelt und die Belastung ausgewertet werden.

Die erfindungsgemäße Lösung kann durch vorteilhafte Ausgestaltungen weiterentwickelt werden, die im Folgenden beschrieben sind.

So können die Messwerte des ausgewählten wenigstens einen Streckenbereichs statistisch ausgewertet werden, insbesondere wird aus den Messdaten ein Mittelwert, eine Standardabweichung des Mittelwerts, ein Maximum und/oder ein Minimum bestimmt. Die statistische Auswertung hat den Vorteil, dass dadurch eine automatische Auswertung der Messwerte besonders einfach durchführbar ist.

Um die Fahrtrichtung zu bestimmen, können aus wenigstens zwei zeitlich hintereinanderliegenden Positionen des Fahrzeugs die Fahrtrichtung, insbesondere in Form eines Kurswinkels, ermittelt werden. Der Kurswinkel des Fahrzeugs wird gegenüber Norden, 0°, für jeden Zeitstempel angegeben. Erst durch den Kurswinkel können die Messwerte effektiv ausgewertet werden, weil so zwischen den beiden Fahrtrichtungen unterschieden werden kann, denen unterschiedliche Fahrtleitungen zugeordnet sind. Durch den Kurswinkel kann somit die Gleisbelegung ermittelt werden.

Um eine unvollständige Messwertaufnahme kompensieren zu können, kann für einen bestimmten Zeitstempel, für den kein Messwert aufgezeichnet ist, ein Wert durch Interpolation aus benachbarten Messwerten ermittelt werden. Fehlende Messwerte können z. B. durch unterschiedliche Abtastbedingungen entstehen.

In einer vorteilhaften Ausgestaltung können auch solche Messwerte ausgewertet werden, deren Position mit einer vorbestimmten Toleranz außerhalb des ausgewählten Streckenbereichs liegt. Dies hat den Vorteil, dass Ungenauigkeiten in der Ermittlung der Position des Fahrzeugs kompensiert werden können. Diese Ungenauigkeit kann beispielsweise durch ein verwendetes GPS-System herrühren.

Wie oben bereits erwähnt, können als Kenngröße ein Strom des Fahrzeugs oder eine Spannung zwischen Fahrleitung und einer Rückleitung oder eine Geschwindigkeit des Fahrzeugs gemessen werden. Ferner können als Kenngrößen, die in Bezug zu einem Lichtbogen zwischen Fahrzeug und Fahrleitung stehen, eine Lichtbogenintensität, eine Lichtbogenbrennspannung und/oder eine Brenndauer des Lichtbogens gemessen werden. Um die Relevanz eines aufgetretenen Lichtbogens richtig einschätzen zu können, wird erfindungsgemäß eine Lichtbogenrate für den ausgewählten Streckenbereich ermittelt, die unter Berücksichtigung der Gesamtzahl der Befahrungen dieses Streckenbereichs durch das Fahrzeug und der Anzahl der Befahrungen mit auftretendem Lichtbogen berechnet wird. Dabei werden mehrere Messwerte für einen Streckenbereich, die innerhalb einer vorbestimmten Zeitspanne liegen, bei der Ermittlung der Lichtbogenrate als eine einzige Befahrung berücksichtigt. Dies hat den Vorteil, dass keine falsche Interpretation von mehreren Lichtbögen, die bei einer einzelnen Befahrung entstehen können, geschieht und die Lichtbögen nur als einzelne Befahrung gewertet werden.

Wie oben bereits erwähnt, kann eine Auswahl an Streckenbereichen, für die Messwerte ausgewertet werden sollen, getroffen werden. Dies kann Rechenkapazität einsparen. Um sinnvolle Streckenbereiche auszuwählen, wird der ausgewählte Streckenbereich erfindungsgemäß automatisch aus der Vielzahl von Streckenbereichen in Abhängigkeit von den darin auftretenden Lichtbögen ausgewählt. Dies hat den Vorteil, dass Streckenbereiche ohne auftretenden Lichtbogen, die für eine Auswertung weniger interessant sind, nicht betrachtet werden müssen. Außerdem hat es den weiteren Vorteil, dass der Instandhalter automatisch erfährt, an welchen Stellen des Netzes eine erhöhte Lichtbogenrate zu beobachten ist und damit ein erhöhter Instandhaltungsbedarf besteht.

In einer weiteren vorteilhaften Ausgestaltung kann ein Teil der Messwerte für den ausgewählten Streckenbereich nicht ausgewertet werden, wenn Umwelteinflüsse in diesem Streckenbereich oder Streckenpunkt vorbestimmte Ausschlussbedingungen erfüllen. So kann eine Verfälschung der Ergebnisse durch Umwelteinflüsse, wie beispielsweise Eisbehang der Fahrleitung oder starker Regen, verhindert werden.

Um eine historische Entwicklung einer Kenngröße, wie beispielsweise des Lichtbogenverhaltens, ermitteln zu können, können die Messwerte für den ausgewählten Streckenbereich nur dann ausgewählt und ausgewertet werden, wenn sie in einen vorgegebenen Zeitraum fallen. So können auch die Ergebnisse der Auswertungen einzelner, aufeinanderfolgender Zeiträume miteinander verglichen werden.

Im Folgenden wird die Erfindung mit Bezug auf die beigefügten Zeichnungen erläutert. Es zeigen:
- Figur 1: eine schematische Darstellung einer verkehrstechnischen Anlage, in der die Erfindung Anwendung findet;
- Figur 2: eine schematische Darstellung einer Fahrstrecke der Anlage aus Figur 1;
- Figur 3: eine schematische Darstellung einer Messwertmatrix und einer Fahrstreckenmatrix im Zusammenhang mit der vorliegenden Erfindung;
- Figur 4: eine schematische Darstellung eines Diagramms, das mittels des erfindungsgemäßen Verfahrens erstellt wurde.

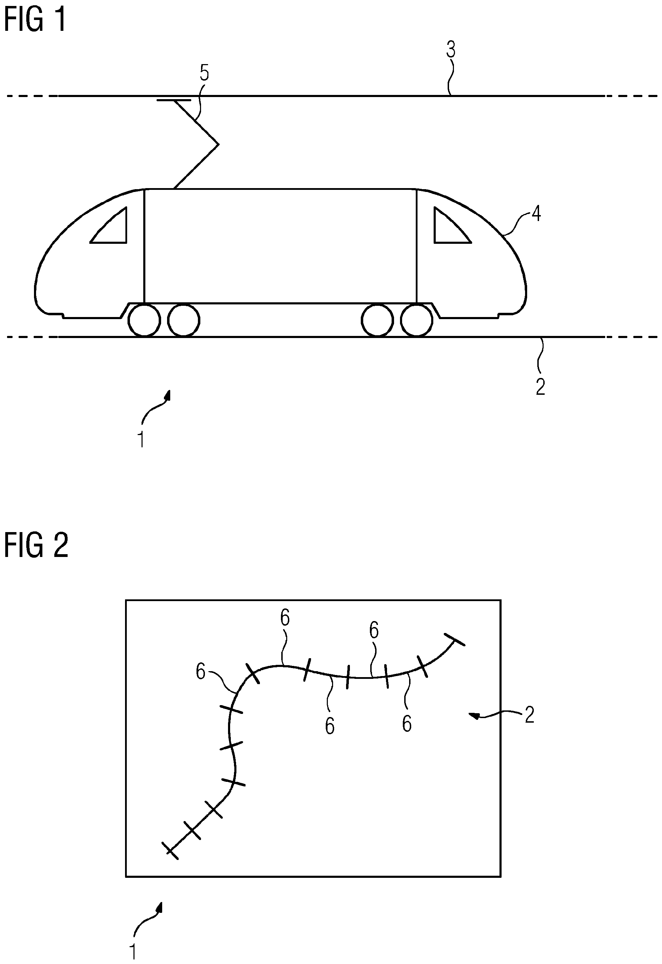

Figur 1 zeigt eine erfindungsgemäße verkehrstechnische Anlage 1, die wenigstens eine Fahrstrecke 2, eine Fahrleitung 3 und wenigstens ein Fahrzeug 4 umfasst. Die verkehrstechnische Anlage 1 ist hier beispielhaft als eine eisenbahntechnische Anlage, das Fahrzeug 4 beispielhaft als Lokomotive und die Fahrstrecke 2 beispielhaft als Schienenpaar dargestellt. Alternativ könnte die verkehrstechnische Anlage auch eine Anlage mit E-Trucks oder O-Bussen sein, die auf einer elektrifizierten Straße fahren. Das Fahrzeug 4 ist als ein elektrisch betriebenes Fahrzeug ausgebildet, das seine Traktionsenergie zumindest teilweise aus der Fahrleitung bezieht. Hierfür weist das Fahrzeug 2 einen Stromabnehmer 5 auf, der zumindest abschnittsweise die Fahrleitung 3 während der Fahrt entlang der Fahrstrecke 2 kontaktiert. Ansonsten ist das Fahrzeug 1 in gleicher Weise ausgebildet wie in der DE 10 2016 201 416 A1 beschrieben, die hier vollständig mit umfasst sein soll.

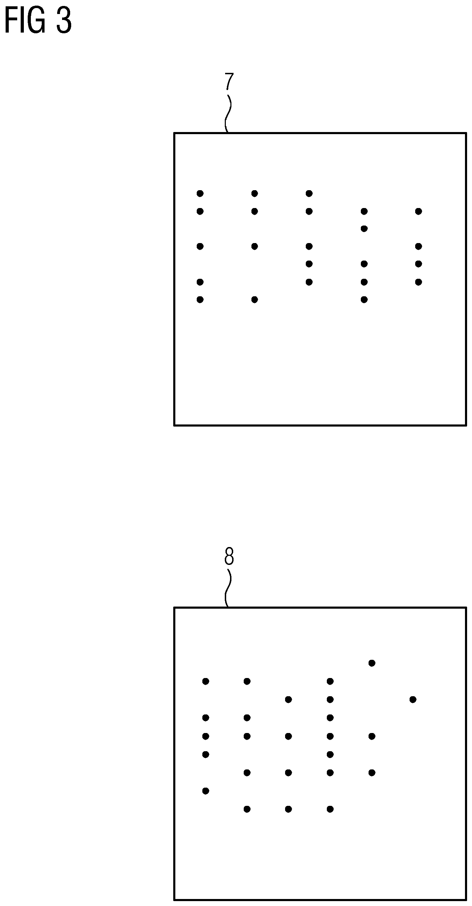

Wie in Figur 2 dargestellt, weist die Fahrstrecke 2 eine Vielzahl von Streckenbereichen 6 auf. Für die Anwendung des erfindungsgemäßen Verfahrens in der verkehrstechnischen Anlage 1 ist eine Messwertmatrix 7 und eine Fahrstreckenmatrix 8 hilfreich, die beide in Figur 3 schematisch dargestellt sind.

Für die Instandhaltung der verkehrstechnischen Anlage 1 sind Informationen zu Ort und Häufigkeit beim Auftreten von Lichtbögen interessant, weil damit ein erhöhter Verschleiß an der Fahrleitung 3 sowie angrenzenden Komponenten wie Streckentrenner, Kreuzungen, Klemmen, etc. (nicht dargestellt) verbunden ist. Darüber hinaus ist der Fahrleitungsverschleiß auch ohne das Auftreten von Lichtbögen durch die Stromstärke charakterisiert und steigt mit zunehmendem Betrag des Stroms zwischen Fahrzeug und Fahrleitung an. Aus diesem Grund werden erfindungsgemäß unterschiedliche Kenngrößen während der Fahrt des Fahrzeugs 4 ermittelt.

Im Folgenden wird zunächst das erfindungsgemäße Verfahren unter Berücksichtigung der Kenngrößen Strom, Spannung und Geschwindigkeit beschrieben.

Mit Hilfe des erfindungsgemäßen Verfahrens werden Kennwerte für den Kontaktstrom zwischen Fahrdraht und Fahrzeug sowie für die Geschwindigkeit des Fahrzeugs entlang der Fahrstrecke bestimmt. Für jeden aufgenommenen Messwert wird die aktuelle Position des Fahrzeugs in Form von einer geografischen Länge lon und einer geografischen Breite lat, eine aktuelle Fahrtrichtung des Fahrzeugs in Form eines Kurswinkels KW und ein Zeitstempel t ermittelt und dem Messwert zugeordnet. Dies geschieht beispielsweise in der in Figur 3 dargestellten Messdatenmatrix, in die Zeitstempel t, Position Lon, lat, Kurswinkel KW und die Messwerte eingetragen werden. Dabei werden jeweils in eine Spalte die Zeitstempel t, geografische Länge lon, geografische Breite lat, Geschwindigkeit v, Strom I, Spannung U und ggf. die Messwerte für weitere Kenngrößen eingetragen. Werte mit gleichem Zeitstempel stehen in derselben Zeile. Sollten Messwerte fehlen, beispielsweise aufgrund unterschiedlicher Abtastbedingungen, werden diese für einen Zeitstempel aus angrenzenden Werten anderer Zeitstempel interpoliert. Dadurch sind für jeden Zeitstempel alle Messwerte vorhanden. Aus der Veränderung zwischen der geografischen Länge lon(tn)und der geografischen Breite lat(tn) zu einem Zeitpunkt tn zu der geografischen Länge lon(tn+1) und bzw. Breite lat(tn+1) zum nächsten Zeitpunkt tn+1 wird der Kurswinkel KW des Fahrzeugs für jeden Zeitstempel berechnet. Die Position kann alternativ auch über ein fahrzeugseitiges Wegmesssystem bestimmt werden.

Die Fahrstrecke 2 ist wie in Figur 2 dargestellt in viele Streckenbereiche 6 unterteilt. Für jede Fahrstrecke wird erfindungsgemäß eine Fahrstreckenmatrix 8 erstellt, die für jeden gewünschten Streckenbereich eine geografische Länge, eine geografische Breite und den Kurswinkel des Fahrzeugs umfasst, wenn das Fahrzeug die Fahrstrecke in der gewünschten Fahrtrichtung befährt. Eine solche Fahrstreckenmatrix 8 kann beispielsweise aus der Messwertmatrix 7 extrahiert, durch Befahrung mit einem GPS-Empfänger gewonnen oder aus Kartendiensten, wie beispielsweise Google Maps oder Open Stree View, entnommen werden. Die Fahrstreckenmatrix 8 enthält beispielsweise die geografische Länge, die geografische Breite und die jeweiligen Kurswinkel in den Streckenbereichen 6. Erfindungsgemäß werden für jeden Streckenbereich 6 in der Fahrstreckenmatrix 8 die Messwerte statistisch ausgewertet, deren zugeordnete Position in den jeweils ausgewählten Streckenbereich fallen. Es werden alle Elemente der Messwertmatrix 7 durchsucht und die laut ihrer geografischen Länge, ihrer geografischen Breite und ihrem Kurswinkel zu dem betrachteten Streckenbereich 6 passenden Messwerte statistisch ausgewertet. Jeder Streckenbereich 6 stellt in der Fahrstreckenmatrix 8 eine Zeile dar. Die Zuordnung von Elementen der Messwertmatrix 7 zu einem Streckenbereich 6 aus der Fahrstreckenmatrix 8 ist beispielsweise erfüllt, wenn jede der folgenden Bedingungen erfüllt ist:
- Die geografische Breite lat aus der Messwertmatrix 7 liegt innerhalb eines Toleranzbereichs um die geografische Breite lat des Streckenbereichs 6 in der Fahrstreckenmatrix 8.
- Die geografische Länge lon aus der Messwertmatrix 7 liegt innerhalb eines Toleranzbereichs um die geografisehe Länge lon des Streckenbereichs 6 in der Fahrstreckenmatrix 8.
- Der Kurswinkel KW aus der Messwertmatrix 7 liegt innerhalb eines Toleranzbereichs um den Kurswinkel KW des Streckenbereichs 6 aus der Fahrstreckenmatrix 8.

Alle auf diese Weise in der Messwertmatrix 7 gefundenen Werte werden dem betrachteten Streckenbereich 6 in der Fahrstreckenmatrix 8 zugewiesen. Die Messwerte können auch von verschiedenen Fahrzeugen aufgenommen worden sein. Die so gesammelten Messwerte für einen Streckenbereich 6 werden anschließend statistisch ausgewertet.

Für die statistische Auswertung wird beispielsweise für jede Kenngröße der Mittelwert, die Standardabweichung des Mittelwerts, das Minimum und das Maximum berechnet. Diese statistischen Kennwerte werden dem betrachteten Streckenbereich 6 zugewiesen. Dies wird für alle Streckenbereiche 6 in der Fahrstreckenmatrix 8 wiederholt, um schließlich die gesamte Fahrstrecke 2 abzudecken. Das Ergebnis kann beispielsweise in einer Ergebnismatrix (nicht dargestellt) für jede Kenngröße, wie beispielsweise Strom, Spannung und/oder Geschwindigkeit, ausgegeben werden. Dem Betreiber der verkehrstechnischen Anlage 1 ist damit beispielsweise bekannt, welcher mittlerer Strom und welche mittlere Geschwindigkeit in jedem Streckenbereich 6 zu erwarten sind. Damit können belastungsgerechte Instandhaltungsintervalle bestimmt werden sowie bei Instandsetzungs- oder Verbesserungsmaßnahmen berücksichtigt werden. Ferner ist dem Betreiber der verkehrstechnischen Anlage 1 dadurch bekannt, an welchen Stellen der Fahrleitung die Fahrleitungsspannung nah oder außerhalb eines zulässigen Grenzwerts liegt. Diese Daten können beispielsweise für Netzausbaupläne oder ähnliches genutzt werden. Darüber hinaus kann bei Spannungsunterschieden in einem Streckenbereich mit Streckentrenner davon ausgegangen werden, dass dieser Streckentrenner bei Überfahrt aufgrund von Transitströmen von Lichtbogenbildung und Verschleiß betroffen ist.

Zusätzlich oder alternativ zu den oben genannten Kenngrößen können weitere Kenngrößen betrachtet werden, um eine zu erheblichen Verschleiß führende Lichtbogenbildung an der Fahrleitung zu erkennen. Die Anwendung des erfindungsgemäßen Verfahrens zur Auswertung von Lichtbögen wird im Folgenden beschreiben.

Bei der Auswertung von Lichtbögen werden als zusätzliche oder alternative Kenngrößen eine Lichtbogenintensität und eine Brenndauer eines Lichtbogens ermittelt. Zusätzlich kann aus den Messwerten für die Spannung eine Lichtbogenbrennspannung berechnet werden, indem die Differenz zwischen der Spannung am Stromabnehmer des Fahrzeugs während eines brennenden Lichtbogens vom letzten bekannten Wert der Spannung vor dem Lichtbogen gebildet wird.

Wie oben beschrieben werden auch hier alle ermittelten Messwerte zusammen mit dem Zeitstempel t, der Position lat, lon und dem Kurswinkel KW protokolliert in der Messwertmatrix 7. Die den Lichtbogen betreffenden Kenngrößen können auch in einer separaten Lichtbogenmatrix (nicht dargestellt) abgelegt werden. Die statistische Auswertung der Messwerte für einen ausgewählten Streckenbereich geschieht in gleicher Weise wie oben bereits beschrieben. Allerdings werden für die Zustandsbestimmung der Fahrleitung mittels der auftretenden Lichtbögen andere oder zusätzliche Kenngrößen betrachtet. Eine für die Beurteilung des Lichtbogenverhaltens essentielle Kenngröße ist beispielsweise die Lichtbogenrate. Hierrunter ist der Anteil von Fahrzeugbefahrungen eines Streckenbereichs zu verstehen, bei dem es zu Lichtbögen kommt. Hierfür muss die Gesamtzahl aller Überfahrten des Streckenbereichs bekannt sein. Dafür werden alle Messwerte z. B. für die Kenngröße Strom wie oben beschrieben für den bestimmten Streckenbereich ausgewählt. Da mehrere Stromwerte einer einzelnen Befahrung entspringen können, wird die tatsächliche Anzahl der Befahrungen durch eine Mindestwartezeit zwischen einzelnen Befahrungen bestimmt. Während der Mindestwartezeit ist es ausgeschlossen, dass das Fahrzeug den Punkt mehrmals befährt. Eine typische Mindestwartezeit ist hier beispielsweise eine Minute. Alle gefundenen Messwerte, deren zeitliche Differenz zueinander geringer als die Mindestwartezeit sind, werden derselben Befahrung zugeordnet. Alle verbleibenden Einträge stellen einzelne Befahrungen und deren Anzahl somit die Gesamtheit aller Befahrungen im betrachteten Zeitraum dar. Analog werden auch alle registrierten Lichtbögen auf die Mindestwartezeit geprüft und einzelnen Befahrungen zugeordnet. Die Lichtbogenrate bestimmt sich somit als Quotient von Befahrungen mit Lichtbogen und Befahrungen ohne Lichtbogen. Dieser Wert wird für alle Streckenbereiche in der Fahrstreckenmatrix 8 oder auch der Lichtbogenmatrix bestimmt.

Aus der Lichtbogenintensität und der Brenndauer kann als ein weiteres Bewertungskriterium des Lichtbogens der gewichtete Größenwert I² • t gebildet werden. Dies geschieht nach der Formel I² • t = UV² • T, wobei I der Strom, t die Zeit, UV die Lichtbogenintensität und T die Brenndauer sind. Auf Grundlage all dieser Werte wird aus der Gesamtheit aller Lichtbogenereignisse eine statistische Bewertung in gleicher Weise wie oben bereits beschrieben durchgeführt. Die Bestimmung von Lichtbogenintensität und Brenndauer ist in der DE 10 2016 201 416 A1 bereits beschrieben.

Die dem hier beschriebenen Berechnungsweg zugrundeliegende Messwerte und Ergebnisse beruhen auf der Annahme eines ungestörten Kontakts zwischen Fahrzeug und Fahrleitung mit Lichtbogenbildung an Störstellen. Kommt es durch Witterungseinflüsse, wie beispielsweise Eisbehang der Fahrleitung oder starker Regen, zu Lichtbögen, können diese Messdaten aus den zu betrachtenden Messwerten und Ergebnissen ausgeschlossen werden. Als Entscheidungsbasis dienen dazu Wetterinformationen, die beispielsweise von Wetterdiensten oder von streckenseitigen Klimastationen ermittelt werden.

Die statistische Auswertung und sich daraus ergebende Kennwerte werden für jeden Streckenbereich 6 in der Fahrstreckenmatrix 8 oder auch einer separaten Lichtbogenstellenmatrix berechnet. Das Ergebnis kann in einer Statistik der Lichtbogenbildung ausgegeben werden, die die berechneten Kennwerte für jeden Streckenbereich enthält. Damit ist es dem Betreiber und Instandhalter der verkehrstechnischen Anlage 1 möglich, ein Lichtbogenverhalten an jedem Ort oder an den von ihm spezifizierten Orten zu bewerten und die Instandhaltungsmaßnahmen geeignet auf die Belastung abzustimmen. Wenn die Messdaten von mehreren Fahrzeugen unterschiedlicher Bauart gewonnen werden, können fahrzeugseitige Einflüsse auf die Anlage eingegrenzt werden. Dazu zählen beispielsweise unterschiedliche Stromabnehmerbauformen, unterschiedliche Strombelastungen aufgrund unterschiedlicher Antriebs- und Hilfsbetriebsleistungen usw.

Weiterhin kann die erfindungsgemäße Auswertung auch auf einen vorbestimmten Zeitraum begrenzt werden und so beispielsweise eine historische Entwicklung eines Lichtbogenverhaltens an einem bestimmten Streckenbereich 6 bestimmt werden. Dies kann ein Indikator für das Alterungsverhalten der Fahrleitungsanlage sein. Dazu wird aus den Messwerten bzw. der Messwertmatrix 7 der zu betrachtende Zeitraum ausgewählt und das Betrachtungsintervall spezifiziert, wie beispielsweise wöchentlich, monatlich, usw.

Die Fahrstreckenmatrix 8 kann auch durch eine sogenannte Lichtbogenmatrix, die gegenüber der Fahrstreckenmatrix 8 weniger Streckenbereiche aufweist, im erfindungsgemäßen Verfahren ersetzt werden. In der Lichtbogenmatrix können manuell Streckenbereiche eingetragen sein, in denen ein Lichtbogen erwartet wird. Alternativ können die ausgewählten Streckenbereiche in der Lichtbogenmatrix aber auch automatisch ermittelt werden. Dies wird im Folgenden beschrieben.

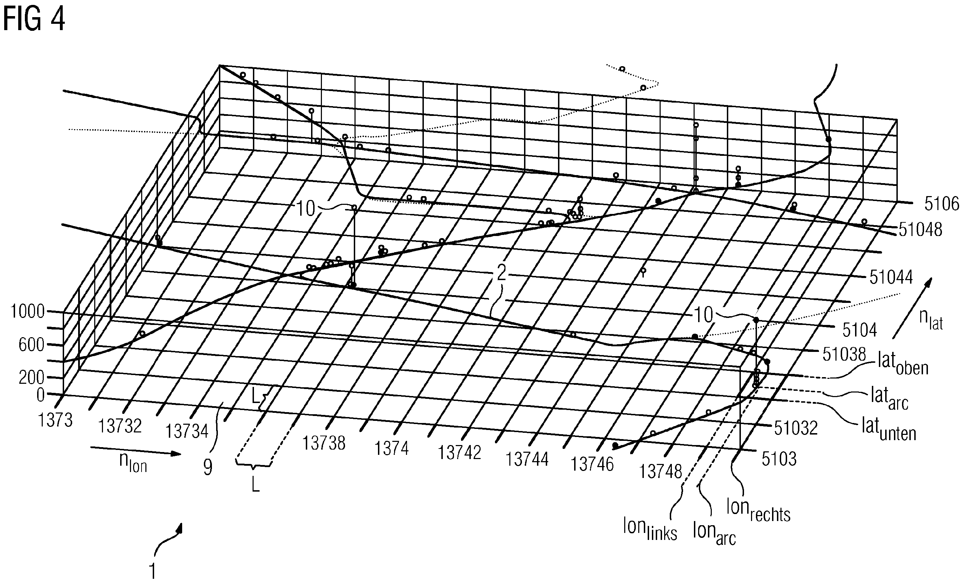

Hierbei werden auf Basis der vorhandenen Messwerte bestimmte Streckenbereiche für die Lichtbogenmatrix ausgewählt. Dabei werden lokale Häufungen von Lichtbögen sowie die Kategosierung nach Intensität und damit eine statistisch belastbare Klassifizierung genutzt. Zunächst werden aus der Messwertmatrix 7 die Abmessungen des von dem wenigstens einen Fahrzeug befahrenen Gebiets bestimmt. Für das automatisierte Auffinden von lokalen Lichtbogenhäufungen wird das befahrene Gebiet in einzelne Planquadrate mit einer vorbestimmten Kantenlänge L, die beispielsweise 10 m beträgt, zerlegt. Diese Zerlegung in Planquadrate ist in Figur 4 dargestellt. Jedes einzelne Planquadrat 9 wird durch eine linke und rechte geografische Länge lonₗᵢₙₖₛ, lon_{rechts} sowie durch eine obere und untere geografische Breite lat_{oben}, latᵤₙₜₑₙ begrenzt. Mit diesen Werten für jedes Planquadrat wird nun die Messwertematrix durchsucht und alle Messwerte werden danach einem bestimmten Planquadrat 9 zugeordnet. Planquadrate 9 ohne zugeordnete Lichtbögen können ignoriert werden und tauchen somit nicht in der Lichtbogen-matrix auf. Für jedes Planquadrat wird geprüft, ob die Anzahl der gefundenen Lichtbögen größer als ein vorbestimmter Schwellwert ist, der als ein Indikator für eine Häufung angesehen wird. Dieser Wert kann entweder vorgegeben werden oder als ein Prozentsatz von der Anzahl der Lichtbögen in dem Planquadrat mit den meisten Lichtbögen festgesetzt werden. Damit wird berücksichtigt, dass die zeitliche Spanne der Messdaten keinen Einfluss auf das Auffinden von Häufungen hat. So wäre beispielsweise ein fester Grenzwert von 20 Lichtbögen bei Messdaten von wenigen Tagen sehr hoch, bei Messdaten von mehreren Monaten jedoch gering. Im Ergebnis wird die Lichtbogenmatrix ermittelt, die nur Streckenbereiche umfasst, in denen Lichtbögen auftreten.

Figur 4 zeigt die verkehrstechnische Anlage 1 eingeteilt in Planquadrate 9. In der verkehrstechnischen Anlage 1 sind mehrere Fahrstrecken 2 von nicht dargestellten Fahrzeugen eingezeichnet. In der Senkrechten ist ein Kennwert für die Lichtbogenhäufigkeit dargestellt. Je höher der Anzeiger 10 für die Lichtbogenhäufigkeit in der Senkrechten über der Fahrstrecke angeordnet ist, desto mehr Lichtbögen sind aufgetreten.

Wenn die Anzahl, der in einem Planquadrat 9 gefundenen Lichtbögen größer oder gleich der Mindestanzahl ist, werden eine mittlere Länge und mittlere Breite des Planquadrates als Lichtbogenort definiert und als neu eingetragener Streckenbereich in der Lichtbogen-Matrix angelegt. Die Lichtbögen können dabei zwar räumlich an einer Position konzentriert sein, jedoch aus mehreren, typischerweise zwei, Fahrtrichtungen herrühren, die sich über den Kurswinkel KW der Lichtbögen unterscheiden.

Dazu kann von allen Lichtbögen im betrachteten Planquadrat 9 der Kurswinkel KW ausgewertet werden. Die Kurswinkel aller Lichtbögen werden in Klassen definierter Breite, wie z. B. 10°, zwischen 0° und 360° sortiert. Von der so erlangten Häufigkeitsverteilung werden die lokalen Maxima bestimmt. Ein Mindestdifferenzwert zwischen zwei lokalen Maxima, z. B. 90°, wird festgelegt, um Schwankungen, die bei der Berechnung des Kurswinkels KW aufgetreten sind (typischerweise +/- 20°), zu unterdrücken und die Werte einer einzigen Richtung zuordnen zu können. Je nach Anzahl der Maxima wird der für den Lichtbogenort relevante Kurswinkel folgendermaßen berechnet:
1 Maximum: Alle Lichtbögen sind bei der Fahrt in einer Fahrtrichtung entstanden. Der Kurswinkel KW des Lichtbogenorts berechnet sich aus dem Mittelwert aller Kurswinkel, die dem Planquadrat zugeordnet sind. Die geographische Länge und Breite des Lichtbogenorts, die bisher als die Mitte des Planquadrates angenommen wurden, werden ersetzt durch den Mittelwert von jeweils allen Längen- und Breitenwerten der dem Planquadrat zugehörigen Lichtbögen.
2 oder mehr (Anzahl k) Maxima: Die Lichtbögen eines Planquadrates entstammen k unterschiedlichen Fahrtrichtungen. Für jedes Maximum der Kurswinkelverteilung werden alle Lichtbögen des Planquadrates anhand ihres Kurswinkels und einem Toleranzbereich durchsucht. Lichtbögen werden einem Maximum zugerechnet, wenn ihr Kurswinkel im Toleranzbereich liegt. Für alle so gefundenen Lichtbögen wird nach der oben beschriebenen Methode der geographische Mittelpunkt des Lichtbogenorts sowie der Mittelwert des Kurswinkels bestimmt und als Lichtbogenort der Lichtbogen-Matrix hinzugefügt. Zuvor wird geprüft, ob für jedes Maximum die Anzahl der ihm zugehörigen Lichtbögen gleich oder größer als der Mindestgrenzwert für die Lichtbogenanzahl ist. Ist die Anzahl geringer, wird dieser Lichtbogenort ignoriert.

Eine Kategorisierung eines Lichtbogenorts kann ebenfalls erfolgen und zwar in einer Anzahl frei wählbarer Kategorien, wie beispielsweise drei Kategorien mit leicht, mittel, stark. Als Bewertungskriterium kann die Intensität UV oder die gewichtete Größe I²t der Lichtbögen des jeweils betrachteten Lichtbogenorts dienen. Für eine Zuordnung zu den Kategorien werden zunächst die Grenzen bestimmt. Dies kann über Quantile erfolgen, d. h. im konkreten Fall mit drei Gruppen mit den Quantilen 33,3%, 66,7% und 100%. Das Quantil gibt an, bei welchem Wert von UV oder I²t 33,3%, 67,7% oder 100% aller Lichtbögen erfasst sind. Bei fünf Gruppen wären die Quantile 20%, 40%, 60%, 80% und 100%.

Für die Zuordnung einer Kategorie zum jeweiligen Lichtbogenort kann der Medianwert von der Lichtbogenintensität UV oder der gewichtete Wert I²t aller Lichtbögen eines Lichtbogenorts gebildet und der entsprechende Wert in die zuvor gebildeten Kategorien einsortiert werden. Beispielsweise sollen für drei Gruppen folgende Werte gelten.

Mittels der zuvor beschriebenen Erfindung, in den verschiedenen Ausführungsformen, erfolgt eine Zuordnung von georeferenzierten Messwerten, wie beispielsweise Geschwindigkeit, Lichtbogen, Strom und/oder Spannung, zu vorbestimmten Positionen durch die Anwendung eines Zuordnungsalgorithmus auf Basis des Kurswinkels sowie von Positions-Toleranzbereichen.

Ferner bietet die Erfindung eine Ermittlung statistischer, verschleißindikativer Kenngrößen wie Lichtbogenintensität, Brenndauer, Brennspannung und/oder der gewichteten Größe I²t als Bewertungskriterium für den Verschleiß an einer spezifischen Komponente oder einem spezifischen Ort der Fahrleitung.

Ferner ermöglicht die Erfindung eine Bestimmung des Alterungsverhaltens entsprechender Stellen durch Auswertung der o. g. Kenngrößen in zeitlich gestaffelten Intervallen und Bewertung der zeitlichen Entwicklung der Kenngrößen.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Verfahren zur Zustandsbestimmung von wenigstens einer entlang einer Fahrstrecke (2) verlaufenden Fahrleitung (3), bei dem auf Seiten von wenigstens einem mehrfach auf der Fahrstrecke (2) fahrenden Fahrzeug (4) mehrere Messwerte von wenigstens einer Kenngröße gemessen und aufgezeichnet werden und für jeden Messwert eine Position (lon, lat) des Fahrzeugs (4) entlang der Fahrstrecke (2), insbesondere in Form von einer geographischen Länge (lon) und Breite (lat), eine Fahrtrichtung des Fahrzeugs und ein Zeitstempel (t) ermittelt und dem Messwert zugeordnet werden, wobei die Kenngröße ein Bewertungskriterium für den Verschleiß an der Fahrleitung ist, **dadurch gekennzeichnet, dass** wenigstens ein Streckenbereich (6) aus einer Vielzahl von Streckenbereichen (6) ausgewählt wird und die ermittelten Messwerte der Kenngröße, deren zugeordnete Position (lon, lat) in den ausgewählten Streckenbereich (6) fallen, ausgewertet werden, wobei eine Lichtbogenrate für den ausgewählten Streckenbereich ermittelt wird, die aus der Gesamtzahl der Befahrungen dieses Streckenbereichs durch das Fahrzeug und der Anzahl der Befahrungen mit auftretendem Lichtbogen berechnet wird, wobei mehrere Befahrungen eines Streckenbereichs, die innerhalb einer vorbestimmten Zeitspanne liegen, bei der Ermittlung der Lichtbogenrate als eine einzige Befahrung berücksichtigt werden, wobei der ausgewählte Streckenbereich automatisch in Abhängigkeit von der Anzahl der darin aufgetretenen Lichtbögen aus der Vielzahl von Streckenbereichen ausgewählt wird, wobei die Anzahl der darin gefundenen Lichtbögen größer als ein Schwellwert ist.

2. Verfahren nach Anspruch 1,
**dadurch gekennzeichnet, dass** die Messwerte des ausgewählten wenigstens einen Streckenbereichs (6) statistisch ausgewertet werden, insbesondere wird aus den Messwerten ein Mittelwert, eine Standardabweichung des Mittelwerts, ein Maximum und/oder ein Minimum bestimmt.

3. Verfahren nach Anspruch 1 oder 2,
**dadurch gekennzeichnet, dass** aus wenigstens zwei zeitlich hintereinanderliegenden Positionen des Fahrzeugs (4) die Fahrtrichtung, insbesondere in Form eines Kurswinkels (KW), ermittelt wird.

4. Verfahren nach einem der oben genannten Ansprüche,
**dadurch gekennzeichnet, dass** für einen bestimmten Zeitstempel (t), für den kein Messwert aufgezeichnet ist, ein Wert durch Interpolation aus benachbarten Messwerten ermittelt wird.

5. Verfahren nach einem der oben genannten Ansprüche,
d**adurch gekennzeichnet,** dass auch solche Messwerte ausgewertet werden, deren Position mit einer vorbestimmten Toleranz außerhalb des ausgewählten Streckenbereichs liegt.

6. Verfahren nach einem der oben genannten Ansprüche,
**dadurch gekennzeichnet, dass** als Kenngröße ein Strom (I) des Fahrzeugs (4) oder eine Spannung (U) zwischen Fahrleitung (3) und einer Rückleitung oder eine Geschwindigkeit (V) des Fahrzeugs (4) gemessen werden.

7. Verfahren nach einem der oben genannten Ansprüche,
**dadurch gekennzeichnet, dass** als Kenngröße eine Lichtbogenintensität (UV), eine Lichtbogenbrennspannung und/oder eine Brenndauer eines Lichtbogens gemessen werden.

8. Verfahren nach einem der oben genannten Ansprüche,
**dadurch gekennzeichnet, dass** ein Teil der Messwerte für den ausgewählten Streckenbereich nicht ausgewertet werden, wenn Umwelteinflüsse in diesem Streckenbereich oder Streckenpunkt vorbestimmte Ausschlussbedingungen erfüllen.

9. Verfahren nach einem der oben genannten Ansprüche,
**dadurch gekennzeichnet, dass** die Messwerte für den ausgewählten Streckenbereich ausgewählt und ausgewertet werden, wenn sie in einen vorgegebenen Zeitraum fallen.

## Claims

1. Method for state determination of at least one contact line (3) running along a route (2),
in which on the part of at least one vehicle (4) travelling on the route (2) multiple times a plurality of measurement values of at least one characteristic variable are measured and recorded and, for each measurement value, a position (lon, lat) of the vehicle (4) along the route (2), in particular in the form of a geographic longitude (lon) and latitude (lat), a direction of travel of the vehicle and a timestamp (t) are ascertained and assigned to the measurement value, wherein the characteristic variable is an assessment criterion for the wear on the contact line,
**characterised in that**
at least one route region (6) is selected from a large number of route regions (6) and the ascertained measurement values of the characteristic variable, the assigned position (lon, lat) of which fall in the selected route region (6), are evaluated, wherein an arc rate for the selected route region is ascertained, which is calculated from the overall number of times this route region is travelled by the vehicle and the number of times it is travelled when an arc occurs, wherein a route region being travelled multiple times within a predetermined time span is considered a single instance of travelling when ascertaining the arc rate, wherein the selected route region is automatically selected from the large number of route regions as a function of the number of arcs occurring therein, wherein the number of arcs found therein is greater than a threshold value.

2. Method according to claim 1,
**characterised in that**
the measurement values of the at least one route region (6) selected are statistically evaluated, in particular an average value, a standard deviation of the average value, a maximum and/or a minimum are determined from the measurement values.

3. Method according to claim 1 or 2,
**characterised in that**
the direction of travel, in particular in the form of a course angle (KW), is ascertained from at least two temporally successive positions of the vehicle (4).

4. Method according to one of the aforementioned claims,
**characterised in that**
for a certain timestamp (t), for which no measurement value is recorded, a value is ascertained from adjacent measurement values by way of interpolation.

5. Method according to one of the aforementioned claims,
**characterised in that**
those measurement values, the position of which lies outside the selected route region with a predetermined tolerance, are also evaluated.

6. Method according to one of the aforementioned claims,
**characterised in that**
a current (I) of the vehicle (4) or a voltage (U) between contact line (3) and a return line or a velocity (V) of the vehicle (4) are measured as characteristic variable.

7. Method according to one of the aforementioned claims,
**characterised in that**
an arc intensity (UV), an arc burning voltage and/or a burning duration of an arc are measured as characteristic variable.

8. Method according to one of the aforementioned claims,
**characterised in that**
some of the measurement values are not evaluated for the selected route region, if environmental influences in this route region or route point meet predetermined exclusion conditions.

9. Method according to one of the aforementioned claims,
**characterised in that**
the measurement values for the selected route region are selected and evaluated if they fall in a predefined timeframe.

## Revendications

1. Procédé de détermination de l'état d'au moins une caténaire (3) s'étendant le long d'un voie (2) de roulement, dans lequel on mesure et on enregistre sur les côtés d'au moins un véhicule (4) empruntant plusieurs fois la voie (2) de roulement, plusieurs valeurs de mesure d'au moins une grandeur caractéristique et, pour chaque valeur de mesure, on détermine et on associe à la valeur de mesure une position (lon, lat) du véhicule (4) sur la voie (2) de roulement, notamment sous la forme d'une longueur (lon)) géographique et d'une largeur (lat), une direction de circulation du véhicule et un horodatage (t), la grandeur caractéristique étant un critère d'évaluation de l'usure de la caténaire,
**caractérisé en ce que**
on choisit au moins un tronçon (6) de voie parmi une pluralité de tronçons (6) de voie et on exploite les valeurs de mesure déterminées de la grandeur caractéristique, dont la position (lon, lat) associée tombe dans le tronçon (6) de voie sélectionnée, dans lequel on détermine un taux d'arcs électriques pour le tronçon de voie sélectionnée, que l'on calcule à partir du nombre total des circulations du véhicule sur ce tronçon de voie et du nombre des circulations avec apparition d'arcs électriques, dans lequel on considère comme une circulation unique, lors de la détermination du taux d'arcs électriques, plusieurs circulations sur un tronçon de voie, qui ont lieu dans un laps de temps déterminé à l'avance, dans lequel on sélectionne, parmi la pluralité des tronçons de voie, le tronçon de voie sélectionné automatiquement en fonction du nombre des arcs électriques qui s'y produisent, le nombre des arcs électriques qui s'y trouvent étant plus grand qu'une valeur de seuil.

2. Procédé suivant la revendication 1,
**caractérisé en ce que**
l'on exploite statistiquement les valeurs de mesure du au moins un tronçon (6) de voie sélectionnée, en déterminant notamment, à partir des valeurs de mesure, une valeur moyenne, un écart-type de la valeur moyenne, un maximum et/ou un minimum.

3. Procédé suivant la revendication 1 ou 2,
**caractérisé en ce que**
l'on détermine, à partir d'au moins deux positions du véhicule (4) se succédant dans le temps, le sens de circulation, notamment sous la forme d'un angle de route (KW).

4. Procédé suivant l'une des revendications précédentes,
**caractérisé en ce que**
pour un horodatage (t) déterminé pour lequel aucune valeur de mesure n'est enregistrée, on détermine une valeur par interpolation à partir de valeurs de mesure voisines.

5. Procédé suivant l'une des revendications précédentes,
**caractérisé en ce que**
l'on exploite aussi des valeurs de mesure, dont la position se trouve, avec une tolérance déterminée à l'avance, à l'extérieur du tronçon de voie sélectionné.

6. Procédé suivant l'une des revendications précédentes,
**caractérisé en ce que**
l'on mesure comme grandeur caractéristique, un courant (I) du véhicule (4) ou une tension (U) entre la caténaire (3) et une ligne de retour ou une vitesse (V) du véhicule (4).

7. Procédé suivant l'une des revendications précédentes,
**caractérisé en ce que**
l'on mesure, comme grandeur caractéristique une intensité (UV) de l'arc électrique, une chute de tension dans l'arc électrique et/ou une durée d'un arc électrique.

8. Procédé suivant l'une des revendications précédentes,
**caractérisé en ce que**
l'on n'exploite pas une partie des valeurs de mesure pour le tronçon de voie sélectionnée si des influences météorologiques satisfont des conditions d'exclusion déterminées à l'avance dans ce tronçon de voie ou à ce point de la voie.

9. Procédé suivant l'une des revendications précédentes,
**caractérisé en ce que**
l'on sélectionne et on exploite des valeurs de mesure pour le tronçon de voie sélectionné si elles sont relevées dans un laps de temps donné à l'avance.
